# EUROPEAN PATENT APPLICATION

(11) **EP 3 012 752 A1**
(43) Date of publication of application: **27.04.2016**
(21) Application number: 15187730.5
(22) Date of filing: 30.09.2015
(51) Int. Cl.: G06F 17/30

(54) **INFORMATION SEARCHING APPARATUS AND CONTROL METHOD THEREOF**

(30) Priority: 21.10.2014 KR 20140142595
(71) Applicant: Samsung Electronics Co., Ltd., Gyeonggi-do 16677 (KR)
(72) Inventor: PARK, Sung-yun, Gyeonggi-do (KR); KIM, Byung-sang, Gyeonggi-do (KR)
(74) Representative: Taor, Simon Edward William

(57) **Abstract**

Provided herein is an information searching apparatus and a control method thereof, the apparatus including a communicator configured to perform data communication with a user terminal apparatus; a cache memory configured to temporarily store search result information in response to a search command; and a controller configured to obtain search result information in response to an expected search command, that is a search command for which a user's search is expected from a plurality of pre-stored source data using information received from an external server, and to temporarily store the obtained search result information in the cache memory; wherein the controller, in response to receiving search request information regarding a search command from the user terminal apparatus, obtains search result information in response to the search command from the cache memory, and controls the communicator to transmit the obtained search result information to the user terminal apparatus, thereby being capable of quickly providing the search result in response to the user's search command.

## Description

Methods and apparatuses consistent with the example embodiments relate to an information searching apparatus and control method thereof, and more particularly, to an information searching apparatus configured to provide a search result in response to a search command, and a control method thereof.

Upon receiving a piece of search request information in response to a user's search command from a user terminal apparatus, a conventional information searching apparatus requests a data server for a search result in response to the user's search command. Accordingly, the data server transmits source data related to the user's search command of a plurality of pre-stored sources, to the information searching apparatus, and then the information searching apparatus obtains the source data received from the data server as a search result in response to the user's search command, and then transmits the obtained search result to the user terminal apparatus and also stores the obtained search result in a cache memory.

Thereafter, upon receiving a piece of search request information in response to a user's search command from the user terminal apparatus, the information searching apparatus determines whether or not there is a piece of search result information related to that search command among the search result information pre-stored in the cache memory. Upon determining that the search result information related to that search command is in the cache memory, the information searching apparatus transmits the search result information related to the user's search command to the user terminal apparatus. However, upon determining that the search result information related to that search command is not in the cache memory, the information searching apparatus receives source data related to the user's search command from the data server, and obtains the received source data as the search result information in response to the user's search command, and transmits the obtained search result to the user terminal apparatus and also stores the obtained search result in the cache memory, as mentioned above.

In other words, if the user's search command is an initial search command or if the search result information temporarily stored in the cache memory regarding the search command is deleted from the cache memory, the conventional information searching apparatus receives source data regarding that search command from the data server, and determines the received source data as the search result information in response to the user's search command, and transmits the search result information to the user terminal apparatus. The conventional information searching apparatus is problematic and inefficient in that it requires a lot of time to provide search result information in response to the user's search command to the user.

Therefore, a purpose of various embodiments of the present disclosure is to resolve the aforementioned problems, that is, to provide an information searching apparatus that is capable of providing search result information in response to a user's search command more quickly.

An embodiment of the present disclosure provides an information searching apparatus including communicator processing circuitry configured to perform data communication with a terminal apparatus; a cache memory configured to temporarily store search result information in response to a search command of the terminal; and a controller configured to obtain search result information in response to an expected search command, that is a search command for which a search is expected from a plurality of pre-stored source data using information received from an external server, and to temporarily store the obtained search result information in the cache memory; wherein the controller, is configured to obtain search result information in response to the search command from the cache memory in response to receiving search request information regarding a search command from the terminal apparatus, and to control the communicator processing circuitry to transmit the obtained search result information to the user terminal apparatus.

The controller, in response to the information being contents information provided from a contents server, may obtain search result information regarding contents related to the contents information on a contents domain, and the contents information may include at least one of viewing rate information, contents registration information, and contents ranking information.

The controller, in response to the information being list information on a list of search keywords searched on a web server, may obtain search result information related to at least one search keyword included in the list information on a search domain.

The controller, in response to the information being a keyword exposed on an SNS (Social Network Service) server, may obtain search result information related to the keyword on a search domain.

The controller, in response to receiving viewing history information of the user from the terminal apparatus, may obtain search result information regarding contents with the user's high preference based on the viewing history information on a contents domain.

The apparatus may further include a storage, and the plurality of source data may be stored in at least one of the storage and a data server.

The controller may set up a storage expiration period of the search result information such that each of the search result information is deleted from the cache memory in an order that each of the search result information was stored in the cache memory.

The controller may set up the storage expiration period of the search result information related to a contents domain among the stored search result information in the cache memory based on reproduction information of the contents.

The controller may set up the storage expiration period of the search result information related to a search domain among the stored search result information in the cache memory based on period information predetermined based on a point where the search result information related to the search domain was stored in the cache memory.

The controller, in response to the search result information regarding the search command not being stored in the cache memory, may obtain the search result information in response to the search command from the plurality of pre-stored source data, and transmit the obtained search result information to the user terminal apparatus and store the obtained search result information in the cache memory.

Another example embodiment of the present disclosure provides a control method for an information searching apparatus, the method including generating an expected search command for which a search is expected using information received from an external server; obtaining source data related to the expected search command of a plurality of pre-stored source data as search result information in response to the expected search command, and temporarily storing the obtained search result information in a cache memory; and in response to receiving search request information regarding a search command from a terminal apparatus, obtaining search result information in response to the search command from the cache memory, and transmitting the obtained search result information to the terminal apparatus.

The obtaining, in response to the information being contents information provided from a contents server, may obtain search result information regarding contents related to the contents information on a contents domain, and the contents information may include at least one of viewing rate information, contents registration information, and contents ranking information.

Obtaining, in response to the information being list information on a list of search keywords searched on a web server, may include obtaining search result information related to at least one search keyword included in the list information on a search domain.

Obtaining, in response to the information being a keyword exposed on an SNS (Social Network Service) server, may include obtaining search result information related to the keyword on a search domain.

Obtaining, in response to receiving viewing history information of the user from the user terminal apparatus, may include obtaining search result information regarding contents with a user's high preference based on the viewing history information on a contents domain.

The plurality of source data may be stored in at least one of a storage and/or a data server.

Storing may include setting up a storage expiration period of the search result information such that each of the search result information is deleted from the cache memory in an order that each of the search result information was stored in the cache memory.

Storing may include setting up the storage expiration period of the search result information related to a contents domain among the stored search result information in the cache memory based on reproduction information of the contents.

Storing may include setting up the storage expiration period of the search result information related to a search domain among the stored search result information in the cache memory based period information predetermined based on a point where the search result information related to the search domain was stored in the cache memory.

The method may further include, in response to the search result information regarding the search request information received from the user terminal apparatus not being pre-stored, requesting a data server for a search result regarding the search request information.

According to the aforementioned various example embodiments, the information searching apparatus may quickly provide a search result in response to a search command.

According to an aspect of the invention, there is provided an information searching apparatus as set out in claim 1. Preferred features are set out in claims 2 to 10.

According to an aspect of the invention, there is provided a method for controlling an information searching apparatus as set out in claim 11. Preferred features are set out in claims 12 to 15.

The above and/or other aspects and advantages of the example embodiments will be more apparent from the following detailed description taken in conjunction with the accompanying drawings, in which like reference numerals refer to like elements, and wherein:
FIG. 1 is a first block diagram of an information search system according to an example embodiment;
FIG. 2 is a second block diagram of an information search system according to another example embodiment;
FIG. 3 is a block diagram of an information searching apparatus configured to provide search result information in response to a search command according to an example embodiment;
FIG. 4 is a block diagram of an information searching apparatus configured to provide search result information in response to a search command according to an example embodiment;
FIG. 5 is a first example view of deleting the search result information pre-stored in a cache memory based on a storage expiration period predetermined per search result information according to an example embodiment;
FIG. 6 is a second example view of deleting the search result information pre-stored in a cache memory based on a storage expiration period predetermined per search result information according to another example embodiment; and
FIG. 7 is a flowchart of a control method of an information searching apparatus according to an example embodiment.

Certain example embodiments are described in greater detail below with reference to the accompanying drawings.

In the following description, like drawing reference numerals are used for the like elements, even in different drawings. The matters defined in the description, such as detailed construction and elements, are provided to assist in an understanding of example embodiments. However, example embodiments can be practiced without those specifically defined matters. Also, well-known functions or constructions are not described in detail since they would obscure the application with unnecessary detail.

Terms such as 'first' and 'second' may be used to describe various components, but they should not limit the various components. Those terms are only used for the purpose of differentiating a component from other components. For example, a first component may be referred to as a second component, and a second component may be referred to as a first component and so forth without departing from the spirit and scope of the disclosure. Furthermore, 'and/or' may include any one of or a combination of the components mentioned.

Furthermore, a singular form may include a plural from as long as it is not specifically mentioned in a sentence. Furthermore, "include/comprise" or "including/comprising" used in the specification represents that one or more components, steps, operations, and elements exist or may be added.

In the example embodiments of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware and/or circuitry, and may be implemented with at least one processor (not shown).

Example embodiments will be explained in more detail below with reference to the drawings attached.

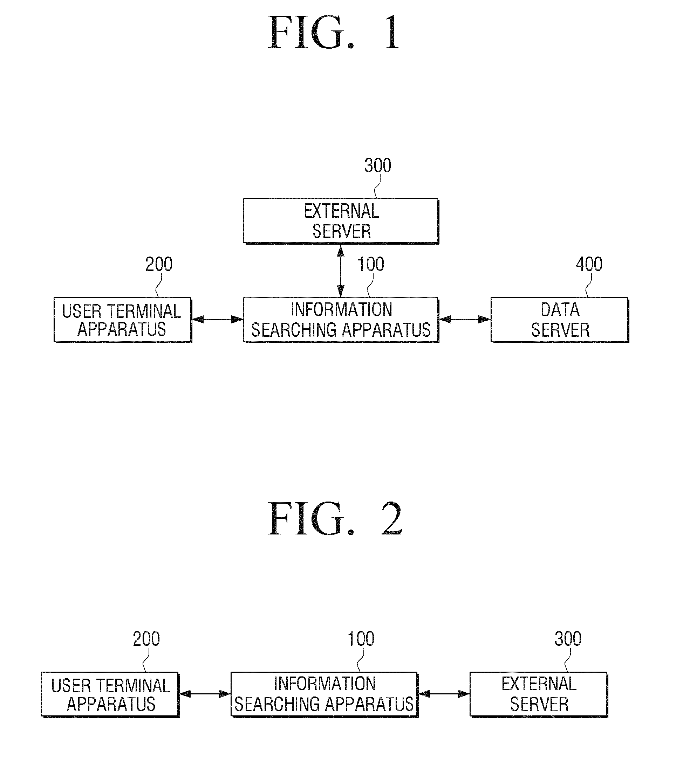

FIG. 1 is a first block diagram of an information search system according to an example embodiment; and FIG. 2 is a second block diagram of an information search system according to another embodiment of the present disclosure.

As illustrated in FIG. 1, the information search system is a system configured to provide a search result in response to a search command, such as, for example, a user's search command, and the information search system includes an information searching apparatus 100, user terminal apparatus 200, external server 300 and data server 400.

Upon receiving search request information in response to a search command from the user terminal apparatus 200, the information searching apparatus 100 receives search result information in response to the search command from the data server 400, and transmits the received search result information to the user terminal apparatus 200.

Furthermore, the user terminal apparatus 200 may, for example, be a terminal apparatus configured to receive a user's search command, and to provide search result information received from the information searching apparatus 100 regarding the input search command. The user terminal apparatus 200 may, for example, be a smart phone, smart TV, tablet PC or the like.

The external server 300 may, for example, be a server configured to provide information for obtaining search result information in response to a search command for which a user's search is expected. Such an external server 300 may include, for example, at least one of a contents server (not illustrated), web server (not illustrated) SNS (Social Network Server) server (not illustrated), or the like.

The data server 400 may, for example, be a server configured to provide source data related to the search command for which a user's search is expected of a plurality of pre-stored source data, to the information searching apparatus 100.

More specifically, for example, when a search command for which the user intends to search is input, and when search request information in response to the input search command is received, the user terminal apparatus 200 transmits the search request information to the information searching apparatus 100. The information searching apparatus 100 that receives the search request information from the user terminal apparatus 200 requests the data server 400 for a search result in response to the search command included in the search request information, and the data server 400 transmits search result information in response to the user's search command to the information searching apparatus 100. The information searching apparatus 100 that received the search result information from the data server 400 temporarily stores the search result information in a cache memory and also transmits the search result information to the user terminal apparatus 200. Herein, the information searching apparatus 100 may, for example, be set up such that the search result information received from the data server 400 is temporarily stored in the cache memory for a predetermined critical period of time. Therefore, when the predetermined critical period of time passes, the search result information stored in the cache memory may be automatically deleted from the cache memory. Meanwhile, the user terminal apparatus 200 may display the search result in response to the user's search command on a screen based on the search result information received from the information searching apparatus 100.

Meanwhile, the information searching apparatus 100 that receives search result information in response to the user's search command from the data server 400 and transmits the received search result information to the user terminal apparatus 200 may receive search result information in response to a search command for which a user's search is expected (hereinafter also referred to as 'expected search command') from the data server 400 and temporarily store the search result information in the cache memory, as mentioned above. More specifically, the information searching apparatus 100 may receive various information from the external server 300 in real time, and generate a search command for which a user's search is expected based on the received information. The external server 300 may include, for example, at least one of a contents server (not illustrated) configured to provide contents, a web server (not illustrated) configured to provide a web page using the HTTP (Hyper Text Transfer Protocol), an SNS (Social Network Service) server (not illustrated), or the like configured to share information between users online. Therefore, the information received from the external server 300 may include, for example, at least one of a search keyword searched by users on the web server (not illustrated) a keyword shared by users from the SNS server (not illustrated), etc.

When such information is received from the external server 300, the information searching apparatus 100 may generate an expected search command based on the received information, and receive the search result information in response to the generated expected search command in the data server 400, and temporarily store the search result information in the cache memory.

When a search request command is received from the user terminal apparatus 200 and such search result information in response to the expected search command is temporarily stored in the cache memory, the information searching apparatus 100 obtains search result information in response to the search request command from among the search result information pre-stored in the cache memory, and transmits the obtained search result information to the user terminal apparatus 200. If the search result information in response to the user's search command is not pre-stored in the cache memory, the information searching apparatus 100 requests the data server 400 for a search result in response to the user's search command, the information searching apparatus 100 receives search result information in response to that search command, and stores the search result information in the cache memory and also transmits the search result information to the user terminal apparatus 200.

Meanwhile, the information searching apparatus 100 may, for example, store a plurality of source data in a storage. In such a case, when information is received from the external server 300 as illustrated in FIG. 2, the information searching apparatus 100 may generate an expected search command based on the received information, and obtain source data related to the generated expected search command from among the plurality of pre-stored source data in the storage(not shown) as search result information in response to the expected search command, and store the obtained source data in the cache memory. Therefore, when a search request command is received from the user terminal apparatus 200, the information searching apparatus 100 may, for example, obtain the search result information in response to the search request command from among the search result information pre-stored in the cache memory, and transmits the obtained search result information to the user terminal apparatus 200. If the search result information in response to the user's search command is not pre-stored in the cache memory, the information searching apparatus 100 may obtain source data related to the search result information in response to the search command from among the plurality of source data pre-stored in the storage, and store the obtained source data in the cache memory and transmit the obtained source data to the user terminal apparatus 200.

As mentioned above, by pre-storing search result information in response to a search command for which a user's search is expected in the cache memory, the information searching apparatus 100 may transmit the search result information in response to the user's search command to the user terminal apparatus 200 more quickly.

The above explanation was made with reference to an information search system configured to provide search result information in response to a user's search command. Components of an example information searching apparatus 100 will be explained in more detail below.

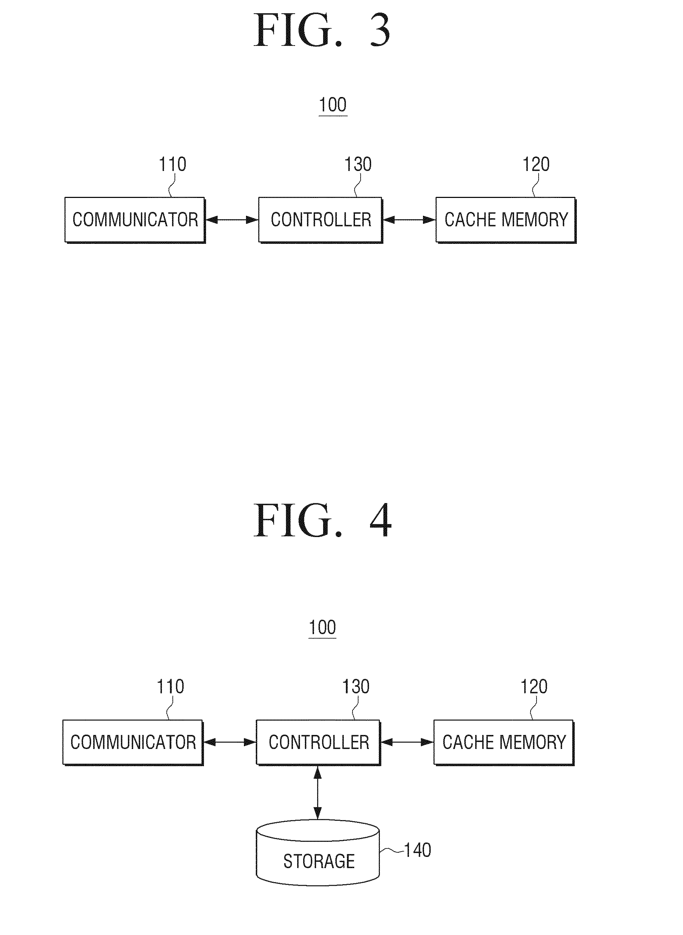

FIG. 3 is a block diagram of an information searching apparatus configured to provide search result information in response to a user's search command according to an example embodiment; and FIG. 4 is a detailed block diagram of an information searching apparatus configured to provide search result information in response to a user's search command according to an example embodiment.

As illustrated in FIG. 3, the information searching apparatus 100 includes, for example, a communicator 110, cache memory 120, and controller 130.

The communicator 110 includes circuitry, e.g., processing circuitry, that performs data communication with the user terminal apparatus 200. The communicator 110 may also be configured to perform data communication with any one of the external server 300 and data server 400.

Such a communicator 160 may, for example, include at least one communication module or circuitry including short distance wireless communication module (not illustrated) and a wireless LAN communication module (not illustrated). The short distance wireless communication module (not illustrated) refers to a communication module configured to perform data communication wirelessly with at least one of the user terminal apparatus 200, external server 300, and data server. The short distance wireless communication module may include for example, a Bluetooth, or Zigbee and the like. A wireless LAN communication module (not illustrated) is a module connected to an external network according to a wireless communication protocol such as Wifi or IEEE to perform communication. Other wireless communication modules may also be included that access mobile communication networks according to various mobile communication standards such as the 3G (3rd Generation), 3GPP (3rd Generation Partnership Project), and LTE (Long Term Evoloution), etc.

The communicator 160 may further include a connector (not illustrated) that includes at least one wired communication module (not illustrated) such as, for example, an HDMI (High-Definition Multimedia Interface), USB (Universal Serial Bus), and IEEE (Institute of Electrical and Electronics Engineers) 1394 and the like. The connector (not illustrated) is a component for providing interfaces with various apparatuses such as USB 2.0, USB 3.0, HDMI, and IEEE 1394 and the like. Upon receiving search request information in response to a search command from the user terminal apparatus 200 through a wired cable, the connector may receive the search request information or transmit the search result information in response to the search command to the user terminal apparatus 200.

The cache memory 120 temporarily stores at least one of search result information in response to the user's search command and search result information in response to a search command for which a user's search is expected. More specifically, the controller 120 is configured to set up storage expiration periods for each of the search result information to be stored in the cache memory 120 differently depending on a predetermined condition, and stores the same in the cache memory 120. Accordingly, the cache memory 120 may delete or retain storage of the search result information pre-stored based on the storage expiration periods predetermined differently per search result information.

The controller 130 is configured to control the overall operations of each component of the information searching apparatus 100. For example, upon receiving search request information in response to a user's search command from the user terminal apparatus 200 through the communicator 110, the controller 130 obtains search request information in response to the search command from the cache memory 120, or receives the same from the data server 400, and transmits the same to the user terminal apparatus 200.

Before receiving search request information in response to a user's search command from the user terminal apparatus 200, using the information received from the external server 300, the controller 130 may obtain search result information in response to a search command for which a user's search is expected (hereinafter referred to as 'expected search command') from a plurality of pre-stored source data, and temporarily store the obtained search result information in the cache memory 120.

The external server 300 may, for example, be a server configured to provide information for obtaining search result information in response to an expected search command in the information searching apparatus 100. Such an external server 300 may include at least one of a contents server (not illustrated), web server (not illustrated), and SNS (Social Network Service), etc. The contents server (not illustrated) is a server for providing contents information including at least one content, and the web server (not illustrated) may be a server for providing a web page using the HTTP (Hyper Text Transfer Protocol). Furthermore, the SNS server (not illustrated) may be a server for sharing information between users online.

The controller 130 may obtain search result information in response to a search command for which a user's search is expected from the plurality of pre-stored source data using information received from at least one of the contents server (not illustrated), web server (not illustrated) and SNS server (not illustrated) and temporarily store the obtained search result information in the cache memory 120. The plurality of source data may be information stored in the data server 400. Therefore, the controller 130 may request the data server 400 for a search result in response to a search command for which a user's search is expected using the information received from at least one of the contents server (not illustrated), web server (not illustrated) and SNS server (not illustrated), and the data server 400 may obtain source data related to the expected search command from among the plurality of pre-stored source data and transmits the obtained source data to the information searching apparatus 100. Accordingly, the controller 130 may store the source data received from the data server 400 in the cache memory 120 as the search result information in response to the expected search command.

According to another example aspect, as illustrated in FIG. 4, the information searching apparatus 100 may further include a storage 140 for storing a plurality of source data. In such a case, the controller 130 may be configured to obtain search result information in response to an expected search command from the plurality of source data pre-stored in the storage 140 using information received from the external server 300, and store the obtained search result information in the cache memory 120.

Upon receiving search request information in response to a user's search command from the user terminal apparatus 200 with such search result information stored in the cache memory 120, the controller 130 may, for example, obtain search result information in response to the user's search command from among the plurality of search result information pre-stored in the cache memory 120, and transmit the obtained search result information to the user terminal apparatus 200. Herein, if the search result information in response to the user's search command is not pre-stored in the cache memory 120, the controller requests the data server 400 through the communicator 110 for search result information in response to the user's search command. Accordingly, the data server 400 transmits source data related to the user's search command from among the plurality of source data, to the information searching apparatus 100. Upon receiving the source data related to the user's search command, the controller 130 stores the received source data in the cache memory 120 as the search result information in response to the user's search command, and also transmits the same to the user terminal apparatus 200.

The controller 130 that stores search result information in response to a search command for which a user's search is expected using information received from at least one of the contents server (not illustrated), web server (not illustrated) and SNS server (not illustrated) in the cache memory 120 may search result information in response to an expected search command according to an example embodiment that will be explained below, and store the same in the cache memory 120. However, the present disclosure is not limited thereto, and thus as mentioned above, in the case where the information searching apparatus 100 includes a storage 140 that includes a plurality of source data, the controller 130 may obtain source data related to the expected search command from among the plurality of source data pre-stored in the storage 140 as search result information in response to the expected search command, and store the same in the cache memory 120.

Explanation will now be made on operations of receiving search result information in response to an expected search command from the data server 400 and storing the search result information in the cache memory 120.

According to an example embodiment, if the information received through the communicator 110 is contents information provided from the contents server (not illustrated), the controller 130 may obtain search result information regarding contents related to the contents information on a contents domain and store the obtained search result information in the cache memory 120. The contents information may include, for example, at least one of viewing rate information, contents registration information, and contents ranking information, etc.

For example, the information received from the external server 300 may be contents information that includes viewing rate information provided from the contents server (not illustrated). In such a case, the controller 130 may generate an expected search command regarding the contents with the highest viewing rate based on the viewing rate information included in the contents information, and request the data server 400 for a search regarding an expected search command pre-generated on the contents domain. In response to such a search request, the data server 400 may obtain at least one source data related to the contents with the highest viewing rate from the source data related to the contents domain from among the plurality of pre-stored source data, and transmit the obtained source data to the information searching apparatus 100. Herein, the source data received from the data server 400 may include, for example, a title, names of actors/actresses starring, and reproduction time information of the contents with the highest viewing rate, etc. Upon receiving such source data, the controller determines the received source data as the search result information related to the expected search command regarding the contents with the highest viewing rate and stores the same in the cache memory 120.

Accordingly, upon receiving search request information including a search command regarding the contents with the highest viewing rate from the user terminal apparatus 200, the controller 130 may obtain pre-stored search result information regarding the contents with the highest viewing rate from among the plurality of search result information pre-stored in the cache memory 120, and transmit the same to the user terminal apparatus 200.

According to another example embodiment, in response to the information received through the communicator 110 being information of a list of search keywords searched on the web server (not illustrated), the controller 130 may obtain search result information related to at least one search keyword included in the list information on the search domain and store the obtained search result information in the cache memory 120. The search keyword may be a keyword searched by a plurality of users for a predetermined period of time on the web server (not illustrated), and search keywords included in the list information may be listed in an order of the most searched according to a search frequency based on number of times searched. Upon receiving such list information, the controller 130 may determine from a search list included in the list information, a search keyword that corresponds to a predetermined condition as the user's expected search command. For example, according to the predetermined condition, the controller 130 may determine as the expected search command the most frequently searched search keyword from among the plurality of search keywords included in the search list.

When such an expected search command is determined, the controller 130 may request the data server 400 to search the expected search command predetermined on the search domain. In response to such a search request, the data server 400 may obtain at least one source data related to the most searched search keyword from the source data related to the search domain of the plurality of pre-stored source data, and transmit the same to the information searching apparatus 100. For example, if a search keyword for "○○○" automobile is the most searched keyword, the data server 400 may obtain source data related to automobile information such as a price, financial source, image, and reviews and the like of the "○○○" automobile based on the search keyword for "○○○" automobile and transmit the obtained source data to the information searching apparatus 100. Upon receiving such source data, the controller 130 may set up the received source data as the search result information related to the expected search command regarding the most searched search keyword, and store the search result information in the cache memory 120.

Upon receiving the search request information including the search command regarding the most searched search keyword from the user terminal apparatus 200, the controller 130 may obtain the search result information pre-stored regarding the most searched search keyword from the plurality of search result information pre-stored in the cache memory 120, and transmit the obtained search result information to the user terminal apparatus 200.

According to another example embodiment, in response to the information received through the communicator 110 being a keyword exposed on the SNS server (not illustrated), the controller 130 may obtain the search result information related to the keyword on the search domain and store the obtained search result information in the cache memory 120. Herein, the keyword exposed on the SNS server (not illustrated) may be a keyword most frequently exposed for a predetermined period of time from among the keywords exposed by a plurality of users.

Upon receiving such a keyword, the controller 130 may determine the keyword as the user's expected search command. In response to such an expected search command being determined, the controller 130 may request the data server 400 for a search regarding an expected search command predetermined on the search domain. In response to such a search request, the data server 400 may obtain at least one source data related to the keyword most frequently exposed on the SNS server (not illustrated) from the source data related to the search domain of the plurality of pre-stored source data, and transmit the obtained source data to the information searching apparatus 100. For example, in response to a keyword regarding "ΔΔΔ" actor/actress being the keyword most frequently exposed on the SNS server (not illustrated), the data server 400 may obtain source data related to entertainment information such as an age, movies that the actor/actress starred in, and agency of "ΔΔΔ", and transmit the obtained source data to the information searching apparatus 100. Upon receiving such a source data, the controller 130 may set up the received source data as the search result information related to the expected search command regarding the keyword most frequently exposed on the SNS server (not illustrated), and store the search result information in the cache memory 120.

Upon receiving search request information including a search command regarding the keyword from the user terminal apparatus 200, the controller 130 may obtain search result information pre-stored regarding that keyword from among a plurality of search result information pre-stored in the cache memory 120, and transmit the obtained search result information to the user terminal apparatus 200.

According to another example embodiment, the controller 140 may obtain search result information in response to a search command for which a user's search is expected based on viewing history information received from the user terminal apparatus 200 and store the obtained search result information in the cache memory 120. The viewing history information may include, for example, contents information, genre information, and information on the user's viewing time of the contents that the user most frequently views, etc.

For example, in a case where the user views "□□□" drama most frequently, the viewing history information may include contents information regarding the "□□□" drama. Upon receiving such viewing history information, the controller 130 may generate an expected search command regarding that drama based on the contents information included in the received viewing history information, and request the data server 400 for a search regarding an expected search command pre-generated on the contents domain. In response such a search request, the data server 400 may obtain at least one source data related to the "□□□" drama from the source data related to the contents domain from among the plurality of pre-stored source data, and transmit the obtained source data to the information searching apparatus 100. The source data received from the data server 400 may include information such as actors/actresses starring in the "□□□" drama, and storyline and the like. Upon receiving such source data, the controller 130 may set up the received source data as the search result information related to the expected search command regarding the drama that the user most frequently views and store the search result information in the cache memory 120.

Upon receiving search request information including a search command regarding the "□□□" drama from the user terminal apparatus 200, the controller 130 may obtain search result information pre-stored regarding the "□□□" drama of the plurality of search result information pre-stored in the cache memory 120, and transmit the obtained search result information to the user terminal apparatus 200.

Meanwhile, the controller 130 may set up a storage expiration period of the search result information pre-stored in the cache memory 120 through example embodiments that will be explained below. The cache memory 120 may, for example, delete search result information temporarily stored from the cache memory 120 based on the storage expiration period predetermined per pre-stored search result information.

According to an example embodiment, the controller 130 may set up the storage expiration period of the search result information such that each of the search result information is deleted from the cache memory 120 in an order that it was stored in the cache memory 120.

According to another example embodiment, the search result information pre-stored in the cache memory 120, in the case where search result information is related to the contents domain, the controller 130 may set up the storage expiration period of the search result information related to the contents domain based on the reproduction information of the contents related to that search result information. The controller 130 may, for example, set up the storage expiration period of the remaining search result information such that the remaining search result information is deleted from the cache memory 120 in the order that it was stored in the cache memory 120.

According to another example embodiment, the search result information pre-stored in the cache memory 120, in the case where search result information is related to the search domain, the controller 130 may set up the storage expiration period of the search result information related to the search domain based on period information predetermined based on a point where the search result information related to the search domain was stored in the cache memory 120. Regarding the remaining search result information, the controller 130 may, for example, set up the storage expiration period of the remaining search result information such that the remaining search result information is deleted from the cache memory 120 in the order that it was stored in the cache memory 120.

However, there is not limitation thereto, and thus in response to at least one search result information of the remaining search result information being search result information related to the contents domain, the controller 130 may set up the storage expiration period of the search result information related to the contents domain based on the reproduction information of the contents related to that search result information.

Operations of deleting a temporarily stored cache memory 120 based on the storage expiration period predetermined per search result information pre-stored in the cache memory 120 in the information searching apparatus 100 will be discussed below.

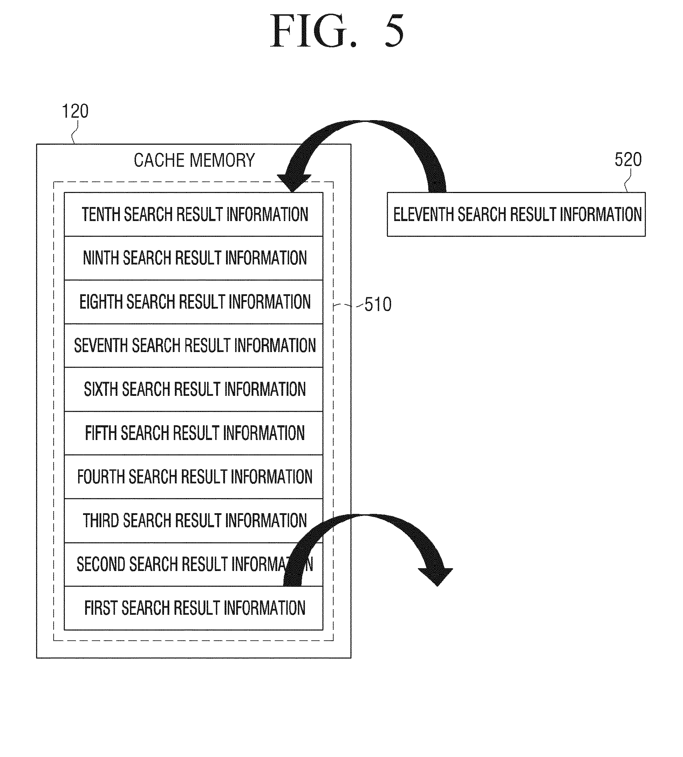

FIG. 5 is a first example view of deleting search result information pre-stored in the cache memory based on the storage expiration period predetermined per search result information according to an example embodiment.

As illustrated in FIG. 5, the controller 130 may store a new eleventh search result information 520 in the cache memory 120 through an example embodiment that will be explained below.

According to an example embodiment, in response to a new search made when the cache memory 120 is full with search result information, the controller 130 may delete the search result information that was stored in the cache memory 120 first among the pre-stored search result information, and may control the cache memory 120 such that a new eleventh search result information is stored in the cache memory 120.

For example, in the cache memory 120 where up to a maximum of ten search result information may be stored, a first to tenth search result information 510 may be fully stored. As such, when storing a new eleventh search result information 520 in the cache memory 120 with the first to tenth search result information 510 fully stored in the cache memory 120, the controller 130 may control the cache memory 120 to delete the first search result information that was stored the earliest or first, of the pre-stored first to tenth search result information 510, and to store the new eleventh search result information 520. At such a control command, the cache memory 120 may be arranged so that the first search result information that was stored first to be deleted and that the new eleventh search result information 520 is deleted after the tenth search result information that was stored last.

According to another example embodiment, the controller 130 may set up the storage expiration period such that each of the first to tenth search result information 510 is temporarily stored in the cache memory 120 for a critical period of time predetermined based on the point each search result information was stored in the cache memory 120. In such a case, the cache memory 120 may delete the search result information sequentially starting from the first search result information that was stored the earliest according to the storage expiration period predetermined by the controller 130.

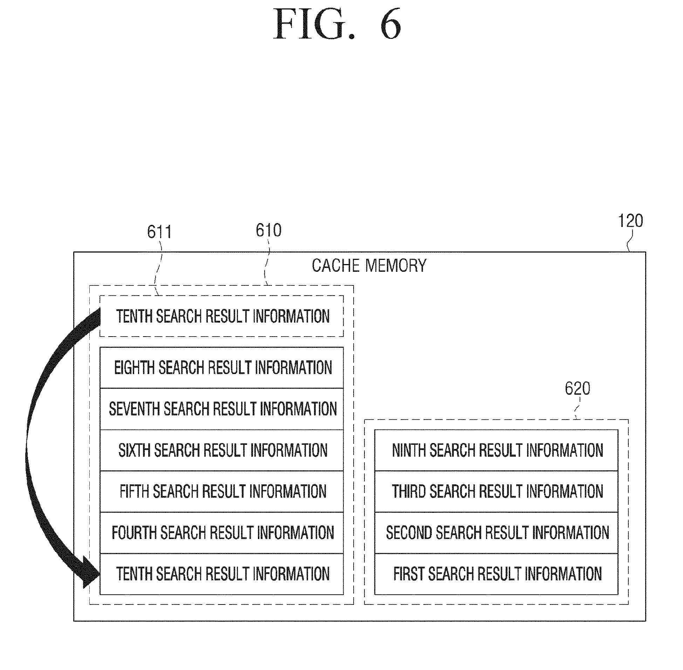

FIG. 6 is a second example view of deleting search result information pre-stored in the cache memory based on the storage expiration period predetermined per search result information according to another example embodiment.

As illustrated in FIG. 6, the cache memory 120 may temporarily store the first to eighth search result information and the tenth search result information regarding the contents domain 610, and may temporarily store the first to third search result information and the ninth search result information regarding the search domain 620.

The controller 130 may set up the storage expiration period for the fourth to eighth and the tenth search result information temporarily stored in the cache memory 120 regarding the contents domain 610 and the first to third and the ninth search result information temporarily stored regarding the search domain 620 according to a predetermined condition.

The controller 130 may set up the storage expiration period of the first to third and the ninth search result information being temporarily stored in the cache memory 120 regarding the search domain 620 based on the period information predetermined based on the point where the first to third and the ninth search result information are stored in the cache memory 120. For example, the storage expiration period of each of the first to third and the ninth search result information being temporarily stored in the cache memory 120 regarding the search domain 620 may be set up such that they are temporarily stored in the cache memory 120 for three days from the point where each search information is stored in the cache memory 120. If each of the search result information is stored in the cache memory 120 in the order of the first search result information, followed by the second search result information, followed by the third search result information, followed by the ninth search result information, the cache memory 120 may delete the search result information in the order of the first search result information, followed by the second search result information, followed by the third search result information, followed by the ninth search result information, according to the predetermined storage expiration period.

The controller 130 may set up the storage expiration period of each of the fourth to eighth and the tenth search result information regarding the contents domain 610 based on the reproduction information per contents related to each of the search result information. The reproduction information per contents may be for example, information on a reproduction time period during which each contents are reproduced. For example, of the fourth to eighth and the tenth search result information, the reproduction time of the contents related to the tenth search result information may be shorter than the reproduction time of the contents related to the remaining search result information. Furthermore, of the fourth to eighth and the tenth search result information, the fourth search result information may be stored in the cache memory 120 the earliest, and the tenth search result information may be stored in the cache memory 120 the latest.

In such a case, the cache memory 120 may arrange the tenth search result information 511 that was stored the latest before the fourth search result information that was stored the earliest such that the tenth search result information 511 is deleted from the cache memory 120 earliest. Then, when the reproduction time of the contents related to the tenth search result information 511 ends, the cache memory 120 may delete the tenth search result information that was temporarily stored.

An example information search method of the information searching apparatus 100 will be explained in detail below.

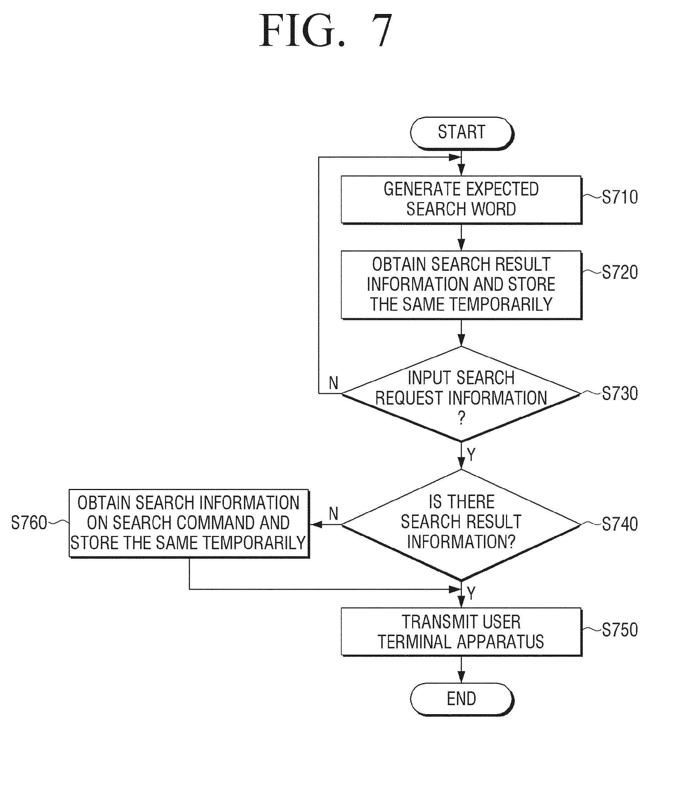

FIG. 7 is a flowchart of a control method of an information searching apparatus according to an example embodiment.

As illustrated in FIG. 7, the information searching apparatus 100 generates a search command for which a user's search is expected using the information received from the external server 300 (S710). Then, the information searching apparatus 100 obtains source data related to the expected search command of the plurality of pre-stored source data as search result information in response to the expected search command and stores the search result information in the cache memory (S720).

The external server 300 may, for example, be a server configured to provide information for obtaining search result information in response to an expected user's search command in the information searching apparatus 100. Such an external server 300 may include at least one of a contents server (not illustrated), web server (not illustrated) and SNS (Social Network Service) server (not illustrated), etc. The contents server (not illustrated) may be a server configured to provide contents information that includes at least one contents, and the web server (not illustrated) may be a server configured to provide a web page using an HTTP (Hyper Text Transfer Protocol). Furthermore, the SNS server (not illustrated) may be a server for sharing information between users online. Therefore, the information searching apparatus 100 may generate a search command for which a user's search is expected using information received from at least one of the contents server (not illustrated), web server (not illustrated) and SNS server (not illustrated), and obtain source data related to the expected search command of the plurality of pre-stored source data as search result information in response to the expected search command and store the obtained search result information in the cache memory.

The plurality of source data may be information stored in the data server 400. The information searching apparatus 100 requests the data server 400 for a search result regarding the generated expected search command using the information received from the external server 300. Accordingly, the data server 400 obtains source data related to the expected search command of the plurality of pre-stored source data, and transmits the obtained source data to the information searching apparatus 100. The information searching apparatus 100 may determine the source data received from the data server 400 as search result information in response to the expected search command and store the search result information in the cache memory.

However, there is no limitation thereto, and the information searching apparatus 100 may include a plurality of source data in a storage that is an internal component. In such a case, the information searching apparatus 100 may obtain source data related to the pre-generated expected search command of the plurality of source data pre-stored in the storage, and determine the obtained source data as search result information in response to the expected search command, and store the obtained search result information in the cache memory.

With the plurality of search result information stored in the cache memory, the information searching apparatus 100 determines whether or not a search request information in response to a user's search command is received from the user terminal apparatus 200 (S730). In response to determining that search result information in response to a user's search command is received from the user terminal apparatus 200, the information searching apparatus 100 determines whether or not the search result information in response to the user's search command is stored in the cache memory (S740). In response to determining that the search result information in response to the user's search command is stored in the cache memory, the information searching apparatus 100 transmits the search result information in response to the user's search command pre-stored in the cache memory to the user terminal apparatus 200 (S750). On the other hand, in response to determining that the search result information in response to the user's search command is not stored in the cache memory, the information searching apparatus 100 requests the data server 400 for a search result regarding the user's search command. Upon receiving source data related to the user's search command from the data server 400, the information searching apparatus 100 determines the received source data as search result information in response to a user's search command and stores the search result information in the cache memory, and transmits the search result information to the user terminal apparatus 200 (S760).

At the aforementioned step S720, the information searching apparatus 100 may obtain search result information in response to an expected search command through an example embodiment that will be explained below.

According to an example embodiment, in response to the information received from the external server 300 being the contents information provided from the contents server (not illustrated), the information searching apparatus 100 may obtain search result information regarding the contents related to the contents information on the contents domain, and temporarily store the obtained search result information in the cache memory. The contents information may, for example, include at least one of viewing rate information, contents registration information, and contents ranking information.

According to another example embodiment, in response to the information received from the external server 300 being information on a list of search keywords searched on the web server (not illustrated), the information searching apparatus 100 may obtain search result information related to at least one search keyword included in the list information on the search domain, and temporarily store the obtained search result information in the cache memory. The search keyword may, for example, be a keyword searched by a plurality of users for a determined period of time on the web server (not illustrated), and the search keywords included in the list information may be listed in an order of the most searched keywords according to a search frequency based on the searched number of times.

According to another example embodiment, in response to the information received from the external server 300 being a keyword exposed on the SNS server (not illustrated), the information searching apparatus 100 may obtain search result information related to that keyword on the search domain and temporarily store the obtained search result information in the cache memory. The keyword exposed on the SNS server (not illustrated) may be a keyword most exposed for a predetermined period of time of the keywords exposed by a plurality of users.

According to another example embodiment, the information searching apparatus 100 may obtain search result information in response to a search command for which a user's search is expected based on the viewing history information received from the user terminal apparatus 200, and temporarily store the search result information in the cache memory. The viewing history information may include contents information, genre information, and information on the user's viewing time distribution of the contents that the user views most frequently, etc.

The information searching apparatus 100 may set up a storage expiration period of the search result information pre-stored in the cache memory through the following example embodiment. The information searching apparatus 100 may delete each search result information temporarily stored in the cache memory based on a storage expiration period predetermined per search result information pre-stored in the cache memory.

According to another example embodiment, the information searching apparatus 100 may set up a storage expiration period of the search result information such that the search result information is deleted from the cache memory in an order that each search result information was stored in the cache memory. Accordingly, the information searching apparatus 100 may delete the search result information from the cache memory sequentially in an order that each search result information was temporarily stored in the cache memory based on the storage expiration period of the search result information starting from the search result information stored the earliest.

According to another example embodiment, in the case of search result information related to the contents domain of the search result information pre-stored in the cache memory, the information searching apparatus 100 may set up the storage expiration period of the search result information related to the contents domain based on the reproduction information of the contents related to that search result information. The information searching apparatus 100 may set up the storage expiration period of the remaining search result information such that each of the remaining search result information is deleted from the cache memory in an order that the remaining search result information was stored in the cache memory.

According to another example embodiment, the information searching apparatus 100 may set up the storage expiration period of the search result information related to the search domain of the search result information pre-stored in the cache memory based on the period information predetermined based on the point where the search result information related to the search domain was stored in the cache memory. The information searching apparatus 100 may set up the storage expiration period of the remaining search result information in an order that each of the remaining search result information was stored in the cache memory.

However, there is no limitation thereto, and if at least one search result information of the remaining search result information is the search result information related to the contents domain, as described above, the information searching apparatus 100 may set up the storage expiration period of the search result information related to the contents domain based on the reproduction information of the contents related to that search result information.

The information searching apparatus 100 may set up the storage expiration period of the search result information per search result information stored in the cache memory, and delete the search result information pre-stored in the cache memory based on the storage expiration period set up, thereby allowing a new piece of search result information to be temporarily stored in the cache memory continuously.

The control method for an information searching apparatus according to various example embodiments described above may be implemented in a program so as to be provided to the information searching apparatus. Particularly, the program including the control method for the information searching apparatus may be stored and provided in a non-transitory computer readable medium.

The non-transitory computer readable medium does not mean a medium storing data for a short period such as a register, a cash, a memory, or the like, but means a machine-readable medium semi-permanently storing the data. Specifically, various applications or programs described above may be stored and provided in the non-transitory computer readable medium such as a compact disc (CD), a digital versatile disk (DVD), a hard disk, a Blu-ray disk, a universal serial bus (USB), a memory card, a read-only memory (ROM), or the like.

Although example embodiments have been shown and described above, it should be understood that the present disclosure is not limited to the disclosed example embodiments and may be variously changed by those skilled in the art without departing from the spirit and the scope of the present disclosure. Therefore, the present disclosure should be construed as including all the changes, equivalents, and substitutions included in the scope of the present disclosure.

## Claims

1. An information searching apparatus comprising:
communicator processing circuitry configured to perform data communication with a user terminal apparatus;
a cache memory configured to temporarily store search result information in response to a search command of the user terminal; and
a controller configured to obtain search result information in response to an expected search command, that is a search command for which a search is expected from a plurality of pre-stored source data using information received from an external server, and to temporarily store the obtained search result information in the cache memory;
wherein the controller is configured to obtain, in response to receiving a piece of search request information regarding a user's search command from the user terminal apparatus, search result information in response to the search command from the cache memory, and to control the communicator to transmit the obtained search result information to the user terminal apparatus.

2. The apparatus according to claim 1,
wherein the controller is configured to obtain, in response to the information being contents information provided from a contents server, search result information regarding contents related to the contents information on a contents domain, and
the contents information comprises at least one of viewing rate information, contents registration information, and contents ranking information.

3. The apparatus according to claim 1 or claim 2,
wherein the controller is configured to obtain, in response to the information being list information on a list of search keywords searched on a web server, search result information related to at least one search keyword included in the list information on a search domain.

4. The apparatus according to any one of claims 1 to 3,
wherein the controller is configured to obtain, in response to the information being a keyword exposed on an SNS, Social Network Service, server, search result information related to the keyword on a search domain.

5. The apparatus according to any one of claims 1 to 4,
wherein the controller is configured to obtain, in response to receiving a piece of viewing history information of the user from the user terminal apparatus, obtains a piece of search result information regarding contents with a high preference based on the viewing history information on a contents domain.

6. The apparatus according to any one of claims 1 to 5,
further comprising a storage, and
the plurality of source data are stored in at least one of the storage and a data server.

7. The apparatus according to any one of claims 1 to 6,
wherein the controller is configured to set up a storage expiration period of the search result information such that each of the search result information is deleted from the cache memory in an order in which each of the search result information was stored in the cache memory.

8. The apparatus according to claim 7,
wherein the controller is configured to set up the storage expiration period of the search result information related to a contents domain among the stored search result information in the cache memory based on reproduction information of the contents.

9. The apparatus according to claim 7 or claim 8,
wherein the controller is configured to set up the storage expiration period of the search result information related to a search domain among the stored search result information in the cache memory based on period information predetermined based on a time at which the search result information related to the search domain was stored in the cache memory.

10. The apparatus according to any one of claims 1 to 9,
wherein the controller is configured to obtain, in response to the search result information regarding the search command not being stored in the cache memory, the search result information in response to the search command from the plurality of pre-stored source data, and to transmit the obtained search result information to the user terminal apparatus and to store the obtained search result information in the cache memory.

11. A method for controlling an information searching apparatus, comprising:
generating an expected search command for which a search is expected using information received from an external server;
obtaining source data related to the expected search command of a plurality of pre-stored source data as search result information in response to the expected search command, and temporarily storing the obtained search result information in a cache memory; and
obtaining search result information regarding the search command from the cache memory in response to receiving a piece of search request information regarding a search command from a user terminal apparatus, and
transmitting the obtained search result information to the user terminal apparatus.

12. The method according to claim 11,
wherein obtaining includes obtaining search result information regarding contents relate to the contents information on a contents domain in response to the information being contents information provided from a contents server, and
the contents information comprising at least one of viewing rate information, contents registration information, and contents ranking information.

13. The method according to claim 11 or claim 12,
wherein obtaining includes obtaining search result information relate to at least one search keyword included in list information on a search domain in response to the information being list information on a list of search keywords searched on a web server.

14. The method according to any one of claims 11 to 13,
wherein obtaining includes obtaining search result information related to the keyword on a search domain in response to the information being a keyword exposed on an SNS (Social Network Service) server.

15. The method according to any one of claims 11 to 14,
wherein obtaining includes obtaining search result information regarding contents with a high preference based on a viewing history information on a contents domain in response to receiving viewing history information from the user terminal apparatus.
